# EUROPÄISCHE PATENTSCHRIFT

(11) **EP 3 698 614 B1**
(45) Veröffentlichungstag und Bekanntmachung des Hinweises auf die Patenterteilung: **07.07.2021**
(21) Anmeldenummer: 19159073.6
(22) Anmeldetag: 25.02.2019
(51) Int. Cl.: A01C 7/08

(54) **VORRICHTUNG FÜR EINEN VERTEILERTURM EINER LANDWIRTSCHAFTLICHEN MASCHINE ZUM FLUIDSTROMUNTERSTÜTZTEN AUSBRINGEN EINES GRANULATARTIGEN MATERIALS, VERTEILERTURM UND LANDWIRTSCHAFTLICHE MASCHINE**
DEVICE FOR A DISTRIBUTOR TOWER OF AN AGRICULTURAL MACHINE FOR APPLYING A GRANULAR MATERIAL WITH ASSISTANCE OF FLUID FLOW, DISTRIBUTOR TOWER AND AGRICULTURAL MACHINE
DISPOSITIF POUR UNE TOUR DE DISTRIBUTION D'UN ENGIN AGRICOLE DESTINÉ À L'ÉPANDAGE À L'AIDE D'UN FLUX DE FLUIDE D'UN MATÉRIAU GRANULEUX, TOUR DE DISTRIBUTION ET ENGIN AGRICOLE

(43) Veröffentlichungstag der Anmeldung: 26.08.2020
(73) Patentinhaber: Kverneland A/S, 4353 Klepp St (NO)
(72) Erfinder: Schumacher, Ferdinand, 59510 Lippetal-Oestinghausen (DE); Matrangolo, Enrico, 59494 Soest (DE)
(74) Vertreter: Bittner, Thomas L.

(56) Entgegenhaltungen:
- EP-A1- 3 372 065
- EP-A1- 3 417 688
- EP-A2- 0 799 560
- DE-A1-102015 116 378
- DE-A1-102016 218 531

## Beschreibung

Die Erfindung betrifft eine Vorrichtung für einen Verteilerturm einer landwirtschaftlichen Maschine zum fluidstromunterstützten Ausbringen eines granulatartigen Materials wie Saatgut, Dünger oder dergleichen sowie einen Verteilerturm und eine landwirtschaftliche Maschine.

### Hintergrund

Aus dem Dokument WO 2017/055 266 A1 ist ein Verteilerturm für eine landwirtschaftliche Maschine bekannt, die zum Ausbringen oder Verteilen eines granulatartigen Materials wie Saatgut, Dünger oder dergleichen dient. Zu solchen landwirtschaftlichen Maschinen gehören beispielsweise Sämaschinen. Die bekannte landwirtschaftliche Maschine sieht vor, das granulatartige Material in einem Vorratsbehälter bereitzustellen und anschließend mittels Dosiervorrichtung einem Luftstrom, welcher in der Regel von einem Gebläse erzeugt wird. beizumischen, wodurch ein Luftstrom mit dem hierin transportierten granulatartigen Material entsteht. Der Luftstrom mit dem granulatartigen Material wird dann an einen Verteilerturm befördert. Dem Verteilerturm zugeordnet ist bei der bekannten Maschine ein kreisförmiger Verteilerkopf, an dessen Umfang sich eine Mehrzahl von Abgängen befindet. Im Verteilerkopf wird der Luftstrom mit dem granulatartigen Partikeln in eine Mehrzahl von Teil-Luftströmen aufgeteilt, was entsprechend der Anzahl von Abgängen oder Reihen erfolgt. Mittels Saatleitungen wird das granulatartige Material zu einer Vielzahl von nachgeordneten Reiheneinheiten oder Ausbringvorrichtungen wie Säschare oder dergleichen geleitet.

Ein weiterer Verteilerturm mit den Merkmalen des Oberbergriffes des Anspruch 1 ist aus der DE 102016218531 bekannt.

Bei der bekannten landwirtschaftlichen Maschine weist der Verteilerturm ein Steigrohr auf, mittels welchem das jeweils auszubringende granulatartige Material (Verteilgut) mit Hilfe des Luftstroms in Richtung des an das Steigrohr anschließenden Verteilerkopfs befördert wird.

Das Steigrohr des Verteilerturms weist regelmäßig einen vertikalen oder leicht gegenüber einer Vertikalen geneigten Verlauf auf und mündet oberseitig im Verteilerkopf, der für eine Verzweigung und Aufteilung des Luft- und Kornvolumenstroms in eine Mehrzahl oder Vielzahl von Abgängen sorgen soll. Der Verteilerkopf weist über seinen Umfang verteilt eine Mehrzahl von Abgängen bzw. Reihen auf, mittels welchen Abgängen der durch das Steigrohr beförderte und im Verteilkopf entsprechend der Anzahl von Abgängen aufgeteilte, Verteilgut-Luftvolumenstrom in Richtung von beispielsweise im Boden oder bodennah geführten Ausbringeinrichtungen wie Scheibenschare, Zinkenschare oder dergleichen befördert wird. Der zunächst das Steigrohr passierende Verteilgut-Luftvolumenstrom wird somit im Verteilerkopf in zahlreiche Verteilgut-Teil-Luftvolumenströme aufgeteilt, wobei die Anzahl der Verteilgut-Teil-Luftvolumenströme der Anzahl von Abgängen bzw. zu vorsorgenden Reihen entspricht.

Zumindest einem der Abgänge oder einer Reihe ist eine Absperrvorrichtung zugeordnet, wobei diese eine steuerbare Weiche aufweist. Mit dieser steuerbaren Weiche kann der in den Abgängen jeweils vorhandene Verteilgut-Teil-Luftvolumenstrom in Richtung einer Saatleitung oder in Richtung einer Rückführeinrichtung umgeleitet werden, wobei die Rückführeinrichtung und die Saatleitung mittels eines Bypasses pneumatisch verbunden sind. Die Weiche kann als Kugelhahn ausgebildet sein.

### Zusammenfassung

Aufgabe der Erfindung ist es, eine Vorrichtung für einen Verteilerturm einer landwirtschaftlichen Maschine zum fluidstromunterstützten Ausbringen eines granulatartigen Materials wie Saatgut, Dünger oder dergleichen sowie einen Verteilerturm und eine landwirtschaftliche Maschine anzugeben, bei denen der fluidstromunterstützte Transport des granulatartigen Materials verbessert ist.

Zur Lösung ist eine Vorrichtung für einen Verteilerturm einer landwirtschaftlichen Maschine zum fluidstromunterstützten Ausbringen eines granulatartigen Materials wie Saatgut, Dünger oder dergleichen nach dem unabhängigen Anspruch 1 geschaffen. Die nebengeordneten Ansprüche betreffen weiterhin einen Verteilerturm sowie eine landwirtschaftliche Maschine. Ausgestaltungen sind Gegenstand von abhängigen Unteransprüchen.

Nach einem Aspekt ist eine Vorrichtung für einen Verteilerturm einer landwirtschaftlichen Maschine zum fluidstromunterstützten Ausbringen eines granulatartigen Materials wie Saatgut, Dünger oder dergleichen geschaffen. Die Vorrichtung weist ein Gehäuse sowie eine in dem Gehäuse ausgebildeten Kanalstruktur auf. Die Kanalstruktur weist als jeweiligen Kanalabschnitt Folgendes auf: Einen Zuführeingang, welcher eingerichtet ist, an einen Zuführkanal zu koppeln und hierdurch mittels eines Fluidstroms geförderte Partikel eines auszubringenden granulatartigen Materials in der Kanalstruktur zu empfangen; einen Ausbringausgang, welcher eingerichtet ist, an einen Ausbringkanal zu koppeln und hierdurch in einer ersten Betriebsart die mittels des Fluidstroms geförderten Partikel des auszubringenden granulatartigen Materials aus der Kanalstruktur auszubringen; einen Rückführausgang, welcher eingerichtet ist. an einen Rückführkanal zu koppeln und hierdurch in einer zweiten Betriebsart, welche von der ersten Betriebsart verschieden ist, die mittels des Fluidstroms geförderten Partikel des auszubringenden granulatartigen Materials aus der Kanalstruktur zurückzuführen; und einen Bypass. welcher den Ausbringausgang und den Rückführausgang fluidisch verbindet. Weiterhin ist eine Verschlusseinrichtung vorgesehen, für die bei der ersten Betriebsart eine erste Verschlussstellung einstellbar ist, in welcher in der Kanalstruktur ein erster Durchgang zwischen dem Zuführeingang und dem Ausbringausgang geöffnet und ein zweiter Durchgang zwischen dem Zuführeingang und dem Rückführausgang geschlossen ist; und bei der zweiten Betriebsart eine zweite Verschlussstellung einstellbar ist, in welcher in der Kanalstruktur der erste Durchgang geschlossen und der zweite Durchgang geöffnet ist. Die Verschlusseinrichtung weist eine Bypass-Verschlusseinrichtung auf, die einstellbar ist, den Bypass zu öffnen und zu schließen. Die Verschlusseinrichtung und die Bypass-Verschlusseinrichtung sind miteinander zwangsgekoppelt, derart, dass der Bypass mittels der Bypass-Verschlusseinrichtung verschlossen wird, wenn die Verschlusseinrichtung in die erste Verschlussstellung verlagert wird, und der Bypass geöffnet wird, wenn die Verschlusseinrichtung in die zweite Verschlussstellung verlagert wird.

Nach einem weiteren Aspekt ist ein Verteilerturm für eine landwirtschaftliche Maschine zum fluidstromunterstützten Ausbringen eines granulatartigen Materials wie Saatgut, Dünger oder dergleichen geschaffen, welcher die Vorrichtung aufweist. Darüber hinaus ist eine landwirtschaftliche Maschine mit dem Verteilerturm vorgesehen.

Mit der vorgeschlagenen Vorrichtung ist erreicht, dass der Bypass zwangsweise verschlossen wird, wenn die Verschlusseinrichtung in die Stellung verlagert wird, in welcher diese in der ersten Betriebsart den ersten Durchgang zwischen dem Zuführeingang und dem Ausbringausgang öffnet, so dass ein Fluidvolumenstrom, beispielsweise ein Luftstrom mit den hierin transportierten Partikeln oder Körnern des granulatartigen Materials ausgebracht werden kann, insbesondere auf ein Feld, über welches eine landwirtschaftliche Maschine mit der Vorrichtung bewegt wird.

Ist hingegen in der zweiten Betriebsart die zweite Verschlussstellung von der Verschlusseinrichtung eingenommen, ist dann der erste Durchgang geschlossen und der zweite Durchgang zwischen dem Zuführeingang und dem Rückführausgang freigegeben, was zwangsweise bedingt, dass der Bypass geöffnet ist. Der Bypass ist so nur dann geöffnet, wenn Bedarf hierfür besteht.

In der ersten Betriebsart, wenn das granulatartige Material mit Hilfe des Fluidstroms ausgebracht werden soll, insbesondere aufs Feld, ist der Bypass geschlossen, so dass kein granulatartiges Material den Bypass unbeabsichtigt passieren kann.

Ein Ausgang wird verschlossen, so dass kein Fördergut zum Ausgang gelangen kann, derart, dass mittels Separieren von Fluid und Fördergut, das Fördergut zurück geführt werden kann, zum Beispiel zu einem Sammler, ohne den Gesamtförderprozess zu beeinflussen oder zum Erliegen zu bringen.

Das Gehäuse der Vorrichtung kann mehrteilig ausgebildet sein, beispielsweise aus zwei Gehäusehälften. Es kann eine Herstellung des Gehäuses aus einem Kunststoffmaterial vorgesehen sein.

Die Verschlusseinrichtung und die Bypass-Verschlusseinrichtung können mittels einer Verbindung aus der folgenden Gruppe miteinander zwangsgekoppelt sein: mechanische Verbindung, hydraulische Verbindung und magnetische Verbindung. Die Verbindungen zwischen der Verschlusseinrichtung und der Bypass-Verschlusseinrichtungen gewährleisten in den verschiedenen Ausführungsformen die zwangsweise Kopplung zwischen den Verschlusseinrichtungen, so ein Betätigen (Verstellen) einer der beiden Verschlusseinrichtungen auch das Betätigen der anderen Verschlusseinrichtung bedingt.

Die Verschlusseinrichtung und die Bypass-Verschlusseinrichtung können jeweils mit einem gemeinsamen Stellelement verbunden sein, welches zum synchronen Einstellen der Verschlusseinrichtung und der Bypass-Verschlusseinrichtung zwischen Verlagerungsstellungen verlagerbar ist. Das gemeinsame Stellelement kann für eine manuelle Bedienung und / oder eine maschinelle Bedienung eingerichtet sein, beispielsweise mit Hilfe eines elektrischen Antriebsmotors. Insbesondere bei einer manuellen Bedienbarkeit des gemeinsamen Stellelements kann dieses von außerhalb des Gehäuses zugänglich sein, so dass der Benutzer hierauf zugreifen kann.

Das gemeinsame Stellelement kann an dem Gehäuse drehbar gelagert sein und mittels Verdrehen in die Verlagerungsstellungen verlagerbar sein. Alternativ kann vorgesehen sein, dass das gemeinsame Stellelement zwischen den Verlagerungsstellungen schwenkbar und / oder verschiebbar ist. Im Fall einer verschiebbaren Lagerung kann ein Schieberelement vorgesehen sein, mittels dessen Betätigung die beiden Verschlusseinrichtungen synchron verstellt werden.

An dem gemeinsamen Stellelement können ein Absperrbauteil der Verschlusseinrichtung und ein Absperrbauteil der Bypass-Verschlusseinrichtung angeordnet sein. Das jeweilige Absperrbauteil ist in einem zugeordneten Abschnitt der Kanalstruktur verlagerbar angeordnet, derart, dass das Absperrbauteil verlagert werden kann, beispielsweise mittels Drehen, um die jeweils zugeordnete Verschlusseinrichtung zu öffnen und zu schließen. Mit Hilfe des gemeinsamen Stellelements kann dieses für beide Verschlusseinrichtungen synchron erfolgen. Die Absperrbauteile können entlang des gemeinsamen Stellelements beabstandet voneinander angeordnet sein.

Das gemeinsame Stellelement kann mit einer Drehspindel gebildet sein, an welcher das jeweilige Absperrbauteil der Verschlusseinrichtung und der Bypass-Verschlusseinrichtung angeordnet ist. Die Absperrbauteile können mit der Drehspindel einstückig gebildet sein. Alternativ kann vorgesehen sein, dass wenigstens eines der Absperrbauteile an der Drehspindel lösbar oder abnehmbar montiert ist. Vergleichbar der Anordnung mit der Drehspindel kann bei einem Schieberelement vorgesehen sein, die Absperrbauteile an einem solchen gemeinsamen Schieberelement anzuordnen. Sind die Absperrbauteile entlang der Drehspindel beabstandet voneinander angeordnet, so kann ein hierzwischen angeordneter Abschnitt der Drehspindel vollständig oder abschnittsweise in einer zugeordneten Gehäuseführung angeordnet sein, also nicht freiliegen.

Mindestens eine der folgenden Einrichtungen kann zum Öffnen und zum Schließen eines jeweils zugeordneten Kanalabschnitts mit einem Kugelflächenventil gebildet sein: Verschlusseinrichtung und Bypass-Verschlusseinrichtung. Bei dem Kugelflächenventil kann das zugeordnete Absperrbauteil, weiches zum Öffnen und zum Schließen innerhalb der Kanalstruktur verlagerbar ist, einen Kugetoberflächenabschnitt aufweisen. Die Kugeloberfläche kann außenseitig Ausnehmungen oder Vertiefungen aufweisen, wodurch Reibungskräfte gemindert werden können, wenn das Absperrbauteil innerhalb des Gehäuses zum Öffnen und zum Schließen der jeweiligen Verschlusseinrichtung verlagert wird. Es kann hierdurch ein Selbstreinigungseffekt bei anhaftenden oder staubhaltigen Partikeln im Förderstrom ausgebildet sein. um ein Blockieren der Mechanik aufgrund von Verschmutzung zu vermeiden. Kugeloberflächenabschnitte der Absperrbauteile für die beiden Verschlusseinrichtungen können entlang des gemeinsamen Stellelements, insbesondere entlang der Drehspindel, verdreht zueinander angeordnet sein. Hierbei weisen die Kugeloberflächenabschnitte der Absperrbauteile in Bezug auf die Längsachse des gemeinsamen Stellelements eine unterschiedliche Winkelstellung auf. Eine Ausbildung der Verschlusseinrichtungen mit einem Kugelhahn kann vorgesehen sein.

Die Verschlusseinrichtung und die Bypass-Verschlusseinrichtung können bei der Ausbildung mit dem Kugelflächenventil jeweils ein innerhalb der Kanalstruktur zum Einstellen verlagerbares Absperrbauteil mit einer außenliegenden Kugelteiloberfläche aufweisen, wobei die außenliegenden Kugelteiloberfläche beim Verlagern zumindest abschnittsweise auf eine zugeordneten am Gehäuse innenliegenden Kugelteiloberfläche geführt ist. Die einander zugeordneten Kugelteiloberflächen können passende Krümmungsradien aufweisen, so dass die Kugelteiloberflächen flächig zur Anlage kommen, wenn die Absperrbauteile mittels Drehbewegung in dem Gehäuse verlagert werden.

Die vorangehend erläuterten Ausgestaltungen können in Verbindung mit dem Verteilerturm sowie der landwirtschaftlichen Maschine, welcher den Verteilerturm aufweist, entsprechend vorgesehen sein.

Verteilertürme für landwirtschaftliche Maschinen zum fluidstromunterstützten Ausbringen eines granulatartigen Materials sind als solche in verschiedenen Ausführungsformen bekannt. Mit der beschriebenen Vorrichtung ist eine Verteilvorrichtung bereitgestellt, die bei verschiedenen Bauarten von Verteilertürmen zum Einsatz kommen kann. In einer Ausführungsform kann der Verteilerturm einen kreisförmigen Verteilerkopf aufweisen, an dessen Umfang mehrere Abgänge angeordnet sind. Im Verteilerkopf wird der das granulatartige Material transportierende Fluidstrom, insbesondere Luftstrom, in mehrere Teil-Fluidströme aufgeteilt, was entsprechend der Anzahl der Abgänge erfolgt. Die Teil-Fluidströme können dann einzeln oder zu mehreren gemeinsam an den Zuführeingang der Vorrichtung gekoppelt werden, in welcher die Verschlusseinrichtung als eine Art Weiche dient, um den Teil-Fluidstrom mit dem granulatartigen Material zum Ausbringausgang oder zum Rückführausgang zu leiten.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Vorrichtung für einen Verteilerturm einer landwirtschaftlichen Maschine zum fluidstromgestützten Ausbringen eines granulatartigen Materials teilweise im Schnitt und
- Fig. 2: eine schematische perspektivische Darstellung der Vorrichtung aus Fig. 1, wobei Absperrbauteile für Verschlusseinrichtungen gegenüber der Darstellung in Fig. 1 verstellt sind.

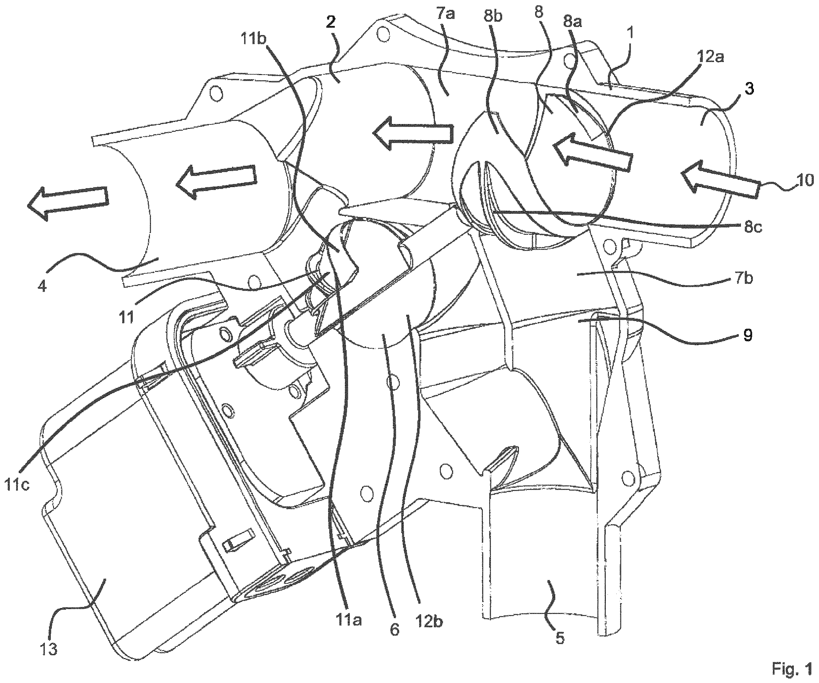

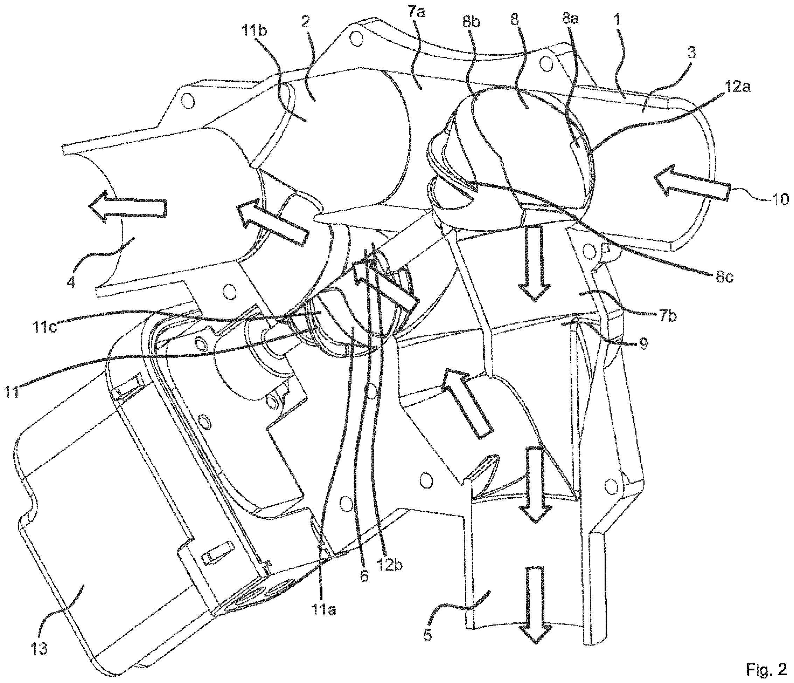

Fig. 1 zeigt eine schematische perspektivische Darstellung einer Vorrichtung für einen Verteilerturm einer landwirtschaftlichen Maschine zum fluidstromgestützten Ausbringen eines granulatartigen Materials wie Saatgut, Dünger oder dergleichen. Bei der landwirtschafitichen Maschine kann es sich beispielsweise um eine Sämaschine handeln, mit der ein Saatgut und wahlweise ergänzend ein Düngermaterial ausgebracht werden. Alternativ kann es sich bei der landwirtschaftlichen Maschine um einen Düngerstreuer handeln, mit dem ein Düngermaterial auf das Feld ausgebracht wird. Bei solchen landwirtschaftlichen Maschinen kann ein Verteilerturm vorgesehen sein, der dazu dient, an mehreren Ausgängen einen Fluid- oder Fluidvolumentstrom bereitzustellen, mit dem jeweils eine (dosierte) Menge eines auszubringenden granulatartigen Materials transportiert wird, wobei Ausgänge dann mit Ausbringleitungen oder -rohren verbunden sind, zum Beispiel Saatleitungen, um schließlich das granulatartige Material aufs Feld abzugeben. Dem Verteilerturm werden das granulatartige Material und ein Fluidstrom, insbesondere ein Luftstrom, zugeführt, um dann Fluid-Teilströme über die verschiedenen Ausgänge des Verteilerturms abzugeben. Verteilertürme als solche sind in verschiedenen Ausführungsformen bekannt. Die in den Fig. 1 und 2 gezeigte Vorrichtung kann bei unterschiedlich als solche bekannten Ausgestaltungen von Verteilertürmen zum Einsatz kommen.

Gemäß Fig. 1 weist die Vorrichtung ein Gehäuse 1 auf, in welchem eine Kanalstruktur 2 gebildet ist, deren Kanalabschnitte jeweils von einem Fluidstrom durchströmt werden können, insbesondere einem Luftstrom oder einem anderen gasförmigen Fluidstrom, um mittels des Fluidstroms das granulatartige Material zu transportieren. Gemäß Fig. 1 weist die Kanalstruktur 2 die folgenden Kanalabschnitte auf: einen Zuführeingang 3, einen Ausgabeausgang 4, einen Rückführausgang 5 sowie einen Bypass 6.

In einem ersten Durchgang 7a, welcher den Zuführeingang 3 und den Ausgabeausgang 4 miteinander verbindet, ist eine Verschlusseinrichtung 8 mit einem Absperrbauteil 8a angeordnet, wobei das Absperrbauteil 8a an einer Drehspindel 9 aufgenommen ist, die an dem Gehäuse 1 drehbar gelagert ist, so dass das Absperrbauteil 8a gedreht werden kann, um den ersten Durchgang 7a zu öffnen und zu schließen. Gleichzeitig wird hierdurch ein zweiter Durchgang 7b zwischen dem Zuführeingang 3 und dem Rückführausgang 5 geöffnet und geschlossen. In Fig. 1 ist eine geöffnete Stellung gezeigt, so dass ein mit auszubringenden Partikeln des granulatartigen Materials beladender Fluidstrom 10 von dem Zuführeingang 3 durch die Verschlusseinrichtung 8 hindurch zu dem Ausgabeausgang 4 gelangen kann, um das granulatartige Material dann schließlich über eine mit dem Ausbringausgang 4 verbundene Ausbringleitung (nicht dargestellt) auf das Feld auszubringen.

In dem Bypass 6 ist eine Bypass-Verschlusseinrichtung 11 mit einem drehbar gelagerten weiteren Verschlussbauteil 11a angeordnet. Bei einer in Fig. 1 gezeigten ersten Betriebsart verschließt das weitere Absperrbauteil 11a den Bypass, so dass durch den Bypass 6 hindurch kein granulatartiges Material versehentlich in den Rückführausgang 5 gelangen kann.

Das Absperrbauteil 8a sowie das weitere Absperrbauteil 11a sind beide an der Drehspindel 9 angeordnet, beispielsweise einstückig hiermit verbunden. Die Absperrbauteile 8a, 11a weisen jeweils eine außenliegende Kugelteiloberfläche 8b, 11b auf, die mit Ausnehmungen 8c, 11c versehen ist. Wird die Drehspindel 9 gedreht, so werden die außenliegenden Kugelteiloberflächen 8b, 11b flächig anliegend über zugeordnete innenliegende Kugelteilflächen 12a, 12b an dem Gehäuse 1 geführt. Mittels einer solchen Drehverlagerung können die Verschlusseinrichtung 8 sowie die Bypass-Verschlusseinrichtung 11 synchron verstellt werden, um die in Fig. 2 gezeigte Stellung auszubilden (zweite Betriebsart). Bei der dort dargestellten Einstellung ist nun der Durchgang 7 zwischen dem Zuführeingang 3 und dem Ausgabeausgang 4 mit dem Absperrbauteil 8a verschlossen, wohingegen der Einführeingang 3 und der Rückführausgang 5 in Verbindung stehen, so dass der Fluidstrom mit den granulatartigen Partikeln in den Rückführausgang 5 geleitet wird. Dort kann der Fluidluftstrom (auch) durch den Bypass 6 hindurch strömen, da das weitere Absperrbauteil 11a in der in Fig. 2 gezeigten Verlagerungsstellung den Bypass 6 freigibt. Zurückzuführendes granulatartiges Material kann die Vorrichtung durch den Rückführausgang (5) verlassen, bei der Darstellung in Fig. 2 also nach unten.

Der Drehspindel 9 ist bei der gezeigten Ausführungsform eine Antriebseinrichtung 13 zugeordnet, die außerhalb des Gehäuses 1 angeordnet ist und zum Beispiel einen Elektromotor umfasst, um die Verschlusseinrichtung 8 sowie die Bypass-Verschlusseinrichtung 11 je nach gewünschter Betriebsart einzustellen. Hierbei sind das Absperrbauteil 8a sowie das weitere Absperrbauteil 11a mittels der Drehspindel 9 zwangsgekoppelt, derart, dass beide Absperrbauteile 8a, 11a stets synchron bewegt werden, was bedingt, dass der Bypass 6 stets geschlossen ist, wenn mittels des Absperrbauteils 8a gemäß Fig. 1 der Durchgang von dem Zuführeingang 3 zu dem Ausgabeausgang 4 hin freigegeben ist. Andererseits ist der Bypass 6 stets freigegeben, wenn das Absperrbauteil der Verschlusseinrichtung 8 den Durchgang (7) zwischen dem Einführeingang 3 und dem Ausgabeausgang 4 verschließt und eine Verbindung zwischen dem Einführeingang 4 und dem Rückführausgang 5 hergestellt ist (vgl. Fig. 2).

## Patentansprüche

1. Vorrichtung für einen Verteilerturm einer landwirtschaftlichen Maschine zum fluidstromunterstützten Ausbringen eines granulatartigen Materials wie Saatgut, Dünger oder dergleichen, mit:
- einem Gehäuse (1);
- einer in dem Gehäuse (1) ausgebildeten Kanalstruktur (2), welche als jeweiligen Kanalabschnitt Folgendes aufweist:
- einen Zuführeingang (3), welcher eingerichtet ist, an einen Zuführkanal zu koppeln und hierdurch mittels eines Fluidstroms geförderte Partikel eines auszubringenden granulatartigen Materials in der Kanalstruktur (2) zu empfangen;
- einen Ausbringausgang (4), welcher eingerichtet ist, an einen Ausbringkanal zu koppeln und hierdurch in einer ersten Betriebsart die mittels des Fluidstroms geförderten Partikel des auszubringenden granulatartigen Materials aus der Kanalstruktur (2) auszubringen;
- einen Rückführausgang (5), welcher eingerichtet ist, an einen Rückführkanal zu koppeln und hierdurch in einer zweiten Betriebsart, welche von der ersten Betriebsart verschieden ist, die mittels des Fluidstroms geförderten Partikel des auszubringenden granulatartigen Materials aus der Kanalstruktur (2) zurückzuführen; und
- einen Bypass (6), welcher den Ausbringausgang (4) und den Rückführausgang (5) fluidisch verbindet;
- einer Verschlusseinrichtung (8), für die
- bei der ersten Betriebsart eine erste Verschlussstellung einstellbar ist, in welcher in der Kanalstruktur (2) ein erster Durchgang (7a) zwischen dem Zuführeingang (3) und dem Ausbringausgang (4) geöffnet und ein zweiter Durchgang (7b) zwischen dem Zuführeingang (3) und dem Rückführausgang (5) geschlossen ist; und
- bei der zweiten Betriebsart eine zweite Verschlussstellung einstellbar ist, in welcher in der Kanalstruktur (2) der erste Durchgang (7a) geschlossen und der zweite Durchgang (7b) geöffnet ist; **gekennzeichnet durch**
eine Bypass-Verschlusseinrichtung (11), die einstellbar ist, den Bypass (6) zu öffnen und zu schließen;
wobei die Verschlusseinrichtung (8) und die Bypass-Verschlusseinrichtung (11) miteinander zwangsgekoppelt sind, derart, dass der Bypass (6) mittels der Bypass-Verschlusseinrichtung (11) verschlossen wird, wenn die Verschlusseinrichtung (8) in die erste Verschlussstellung verlagert wird, und der Bypass (6) geöffnet wird, wenn die Verschlusseinrichtung (8) in die zweite Verschlussstellung verlagert wird.

2. Vorrichtung nach Anspruch 1, **dadurch gekennzeichnet, dass** die Verschlusseinrichtung (8) und die Bypass-Verschlusseinrichtung (11) mittels einer Verbindung aus der folgenden Gruppe miteinander zwangsgekoppelt sind: mechanische Verbindung, hydraulische Verbindung und magnetische Verbindung.

3. Vorrichtung nach Anspruch 1 oder 2, **dadurch gekennzeichnet, dass** die Verschlusseinrichtung (8) und die Bypass-Verschlusseinrichtung (11) jeweils mit einem gemeinsamen Stellelement verbunden sind, welches zum synchronen Einstellen der Verschlusseinrichtung (8) und der Bypass-Verschlusseinrichtung (11) zwischen Verlagerungsstellungen verlagerbar ist.

4. Vorrichtung nach Anspruch 3, **dadurch gekennzeichnet, dass** das gemeinsame Stellelement an dem Gehäuse (1) drehbar gelagert ist und mittels Verdrehen in die Verlagerungsstellungen verlagerbar ist.

5. Vorrichtung nach Anspruch 4, **dadurch gekennzeichnet, dass** an dem gemeinsamen Stellelement ein Absperrbauteil (8a) der Verschlusseinrichtung (8) und ein Absperrbauteil (11a) der Bypass-Verschlusseinrichtung (11) angeordnet sind.

6. Vorrichtung nach Anspruch 5, **dadurch gekennzeichnet, dass** das gemeinsame Stellelement mit einer Drehspindel (9) gebildet ist, an welcher das jeweilige Absperrbauteil (8a, 11a) der Verschlusseinrichtung (8) und der Bypass-Verschlusseinrichtung (11) angeordnet ist.

7. Vorrichtung nach mindestens einem der vorangehenden Ansprüche, **dadurch gekennzeichnet, dass** mindestens eine der folgenden Einrichtungen zum Öffnen und zum Schließen eines jeweils zugeordneten Kanalabschnitts mit einem Kugelflächenventil gebildet ist: Verschlusseinrichtung (8) und Bypass-Verschlusseinrichtung (11).

8. Vorrichtung nach Anspruch 7, **dadurch gekennzeichnet, dass** das die Verschlusseinrichtung (8) und die Bypass-Verschlusseinrichtung (11) jeweils ein innerhalb der Kanalstruktur (2) zum Einstellen verlagerbares Absperrbauteil (8a, 11a) mit einer außenliegenden Kugelteiloberfläche aufweisen, wobei die außenliegenden Kugelteiloberfläche (8b, 11b) beim Verlagern zumindest abschnittsweise auf eine zugeordneten am Gehäuse (1) innenliegenden Kugelteiloberfläche (12a, 12b) geführt ist.

9. Verteilerturm für eine landwirtschaftliche Maschine zum fluidstromunterstützten Ausbringen eines granulatartigen Materials wie Saatgut, Dünger oder dergleichen, aufweisend eine Vorrichtung nach mindestens einem der vorangehenden Ansprüche.

10. Landwirtschaftliche Maschine zum fluidstromunterstützten Ausbringen eines granulatartigen Materials wie Saatgut, Dünger oder dergleichen, aufweisend einen Verteilerturm nach Anspruch 9.

## Claims

1. An apparatus for a distribution tower of an agricultural machine for dispensing a granular material, such as seed, fertilizer or the like, in a manner assisted by a fluid flow, comprising:
- a housing (1);
- a channel structure (2) which is formed in the housing (1) and comprises the following as a respective channel section:
- a feed inlet (3) adapted to couple to a feed channel and thereby to receive particles of a granular material to be discharged conveyed by means of a fluid flow in the channel structure (2);
- a dispensing outlet (4) adapted to couple to a dispensing channel and thereby to dispense, in a first operating mode, the particles of granular material to be dispensed conveyed by means of the fluid flow from the channel structure (2);
- a return outlet (5) adapted to couple to a return channel and thereby to return, in a second operating mode different from the first operating mode, the particles of granular material to be discharged conveyed by the fluid flow from the channel structure (2); and
- a bypass (6) fluidly connecting the dispensing outlet (4) and the return outlet (5);
- a closure device (8), for which
- in the first operating mode, a first closure position can be adjusted in which, in the channel structure (2), a first passage (7a) between the feed inlet (3) and the dispensing outlet (4) is open and a second passage (7b) between the feed inlet (3) and the return outlet (5) is closed; and
- in the second operating mode, a second closure position can be adjusted in which, in the channel structure (2), the first passage (7a) is closed and the second passage (7b) is opened, **characterized by**
a bypass closure device (11) adjustable to open and close the bypass (6);
wherein the closure device (8) and the bypass closure device (11) are forcibly coupled to one another in such manner that the bypass (6) is closed by means of the bypass closure device (11) when the closure device (8) is displaced into the first closure position and the bypass (6) is opened when the closure device (8) is displaced into the second closure position.

2. The apparatus according to claim 1, **characterized in that** the closure device (8) and the bypass closure device (11) are forcibly coupled to one another by means of a connection from the following group: mechanical connection, hydraulic connection and magnetic connection.

3. The apparatus according to claim 1 or 2, **characterized in that** the closure device (8) and the bypass closure device (11) are each connected to a common actuator which is displaceable between displacement positions for synchronous adjustment of the closure device (8) and the bypass closure device (11).

4. The apparatus according to claim 3, **characterized in that** the common actuator is rotatably mounted on the housing (1) and can be displaced into the displacement positions by means of rotation.

5. The apparatus according to claim 4, **characterized in that** a shut-off component (8a) of the closure device (8) and a shut-off component (11a) of the bypass closure device (11) are arranged on the common actuator.

6. The apparatus according to claim 5, **characterized in that** the common actuator is formed with a rotary spindle (9) on which the respective shut-off component (8a, 11a) of the closure device (8) and the bypass closure device (11) is arranged.

7. The apparatus according to at least one of the preceding claims, **characterized in that** at least one of the following devices for opening and for closing a respective associated channel section is formed with a spherical valve: closure device (8) and bypass closure device (11).

8. The apparatus according to claim 7, **characterized in that** the closure device (8) and the bypass closure device (11) each comprise a shut-off component (8a, 11a) displaceable within the channel structure (2) for adjustment and having an outer partial spherical surface, wherein the outer partial spherical surface (8b, 11) is guided during displacement at least in sections on an associated partial spherical surface (12a, 12b) located on the inside of the housing (1)

9. A distribution tower for an agricultural machine for dispensing a granular material, such as seed, fertilizer or the like, in a manner assisted by a fluid flow, comprising an apparatus according to at least one of the preceding claims.

10. An agricultural machine for dispensing a granular material, such as seed, fertilizer or the like, in a manner assisted by a fluid flow, comprising a distribution tower according to claim 9.

## Revendications

1. Dispositif pour une tour de distribution d'une machine agricole pour l'épandage d'un matériau du genre granulat tel que des semences, des engrais ou autres, comprenant :
- un boîtier (1) ;
- une structure de canal (2) formée dans le boîtier (1), laquelle présente les éléments suivants en tant que section de canal respective :
- une entrée d'alimentation (3) conçue pour s'accoupler à un canal d'alimentation et pour ainsi recevoir des particules d'un matériau du genre granulat à épandre, transportées au moyen d'un flux de fluide, dans la structure de canal (2) ;
- une sortie d'épandage (4) conçue pour s'accoupler à un canal d'épandage et pour ainsi épandre les particules du matériau du genre granulat à épandre transportées au moyen du flux de fluide, à partir de la structure de canal (2), dans un premier mode de fonctionnement ;
- une sortie de renvoi (5) conçue pour s'accoupler à un canal de renvoi et pour ainsi renvoyer les particules du matériau du genre granulat à épandre transportées au moyen du flux de fluide à partir de la structure de canal (2) dans un deuxième mode de fonctionnement différent du premier mode de fonctionnement ; et
- une dérivation (6) reliant fluidiquement la sortie d'épandage (4) et la sortie de renvoi (5) ;
- un dispositif de fermeture (8) pour lequel
- une première position de fermeture peut être réglée dans le premier mode de fonctionnement, dans laquelle, dans la structure de canal (2), un premier passage (7a) entre l'entrée d'alimentation (3) et la sortie d'épandage (4) est ouvert et un deuxième passage (7b) entre l'entrée d'alimentation (3) et la sortie de renvoi (5) est fermé ; et
- une deuxième position de fermeture peut être réglée dans le deuxième mode de fonctionnement, dans laquelle, dans la structure de canal (2), le premier passage (7a) est fermé et le deuxième passage (7b) est ouvert ; **caractérisé par**
un dispositif de fermeture de dérivation (11), lequel peut être réglé pour ouvrir et fermer la dérivation (6) ;
dans lequel le dispositif de fermeture (8) et le dispositif de fermeture de dérivation (11) sont accouplés de force entre eux, de telle façon que la dérivation (6) est fermée au moyen du dispositif de fermeture de dérivation (11) lorsque le dispositif de fermeture (8) est déplacé vers la première position de fermeture, et que la dérivation (6) est ouverte lorsque le dispositif de fermeture (8) est déplacé vers la deuxième position de fermeture.

2. Dispositif selon la revendication 1, **caractérisé en ce que** le dispositif de fermeture (8) et le dispositif de fermeture de dérivation (11) sont accouplés de force entre eux au moyen d'une liaison parmi le groupe suivant : une liaison mécanique, une liaison hydraulique et une liaison magnétique.

3. Dispositif selon la revendication 1 ou 2, **caractérisé en ce que** le dispositif de fermeture (8) et le dispositif de fermeture de dérivation (11) sont reliés respectivement à un élément de réglage commun, lequel est déplaçable entre des positions de déplacement pour le réglage synchrone du dispositif de fermeture (8) et du dispositif de fermeture de dérivation (11).

4. Dispositif selon la revendication 3, **caractérisé en ce que** l'élément de réglage commun est monté de façon rotative sur le boîtier (1) et peut être déplacé vers les positions de déplacement par rotation.

5. Dispositif selon la revendication 4, **caractérisé en ce qu'**un obturateur (8a) du dispositif de fermeture (8) et un obturateur (11a) du dispositif de fermeture de dérivation (11) sont disposés sur l'élément de réglage commun.

6. Dispositif selon la revendication 5, **caractérisé en ce que** l'élément de réglage commun est formé avec une broche rotative (9), sur laquelle est disposé un obturateur (8a, 11a) respectif du dispositif de fermeture (8) et du dispositif de fermeture de dérivation (11).

7. Dispositif selon l'une au moins des revendications précédentes, **caractérisé en ce que** l'un au moins des systèmes suivants pour l'ouverture et la fermeture d'une section de canal respectivement associée est formé avec une soupape à surface sphérique : dispositif de fermeture (8) et dispositif de fermeture de dérivation (11).

8. Dispositif selon la revendication 7, **caractérisé en ce que** le dispositif de fermeture (8) et le dispositif de fermeture de dérivation (11) présentent respectivement un obturateur (8a, 11a) déplaçable pour le réglage à l'intérieur de la structure de canal (2) avec une surface de rotule extérieure, dans lequel la surface de rotule extérieure (8b, 11b) est guidée au moins par sections vers une surface de rotule (12a, 12b) intérieure associée sur le boîtier (1) pendant le déplacement.

9. Tour de distribution pour une machine agricole pour l'épandage assisté par un flux de fluide d'un matériau du genre granulat tel que des semences, des engrais ou autres, présentant un dispositif selon l'une au moins des revendications précédentes.

10. Machine agricole pour l'épandage assisté par un flux fluide d'un matériau du genre granulat tel que des semences, des engrais ou autres, présentant une tour de distribution selon la revendication 9.
